Europäisches Patentamt

European Patent Office

Office européen des brevets

(19)

(11) Veröffentlichungsnummer: **0 002 843**
A1

(12) **EUROPÄISCHE PATENTANMELDUNG**

(21) Anmeldenummer: 78200269.5

(22) Anmeldetag: 30.10.78

(51) Int. Cl.²: **B 60 S 1/40**

(30) Priorität: 17.12.77 DE 2756476

(43) Veröffentlichungstag der Anmeldung: 11.07.79
Patentblatt 79/14

(84) Benannte Vertragsstaaten: BE DE FR GB SE

(71) Anmelder: **ROBERT BOSCH GMBH, Postfach 50,
D-7000 Stuttgart 1 (DE)**

(72) Erfinder: **Weiler, Paul, Brandrain 27, D-7594
Kappelrodeck (DE)**
Erfinder: **Brümmer, Dietmar, Hindenburgstrasse 35,
D-7582 Bühlertal (DE)**

(54) **Wischvorrichtung für Scheiben von Kraftfahrzeugen.**

(57) Eine Vorrichtung zum Wischen von Kraftfahrzeugscheiben umfaßt ein Wischblatt mit einem zu einem Traggestell gehörenden Druckverteilungsbügel (14), der zwei
mit Abstand voneinander angeordnete Seitenwangen
(18, 20) hat. In den Wangen (18, 20) ist ein Gelenkbolzen
(22) befestigt, der seitlich aus dem Druckverteilungsbügel
(14) ragt. An diesem Gelenkbolzen (22) ist ein Anschlußelement (28) angelenkt, an dem ein Wischerarm (10) anschließbar ist. Das Anschlußelement (28) ist über einen
Steg (64) mit einem Hilfsglied (58) verbunden, welches
zwischen den Seitenwangen (18, 20) des Druckverteilungsbügels (14) auf dem dort befindlichen Gelenkbolzenabschnitt pendelbar gelagert ist. Der Steg (64) erstreckt
sich von dem Anschlußelement (28) aus über die eine
Wange (20) zu dem Hilfsglied (58).

R. 4226
21.10.1977 Sa/Sm

ROBERT BOSCH GMBH, 7000 Stuttgart 1

Wischvorrichtung für Scheiben von Kraftfahrzeugen

Stand der Technik

Die Erfindung geht aus von einer Wischvorrichtung nach der
Gattung des Hauptanspruchs. Es ist schon eine Wischvorrichtung bekannt, bei der das Anschlußelement lediglich auf dem
Abschnitt des Gelenkbolzens gelagert ist, der seitlich aus
dem Druckverteilungsbügel ragt. Bei dieser Art der Lagerung
müssen die Wangen bzw. der gesamte Druckverteilungsbügel entsprechend stark dimensioniert werden, damit im Betrieb der
Wischanlage die Bolzenbefestigung den ständigen Wechselbelastungen gewachsen ist.

Vorteile der Erfindung

Die erfindungsgemäße Wischvorrichtung mit den kennzeichnenden
Merkmalen des Hauptanspruchs hat demgegenüber den Vorteil,
daß der Druckverteilungsbügel in dem Bereich, wo der Gelenkbolzen befestigt ist, durch das Hilfsglied verstärkt wird,
so daß die Betriebsbelastung der Bolzenbefestigung bei der
Dimensionierung des Druckverteilungsbügels außer Betracht
bleiben kann.

Zeichnung

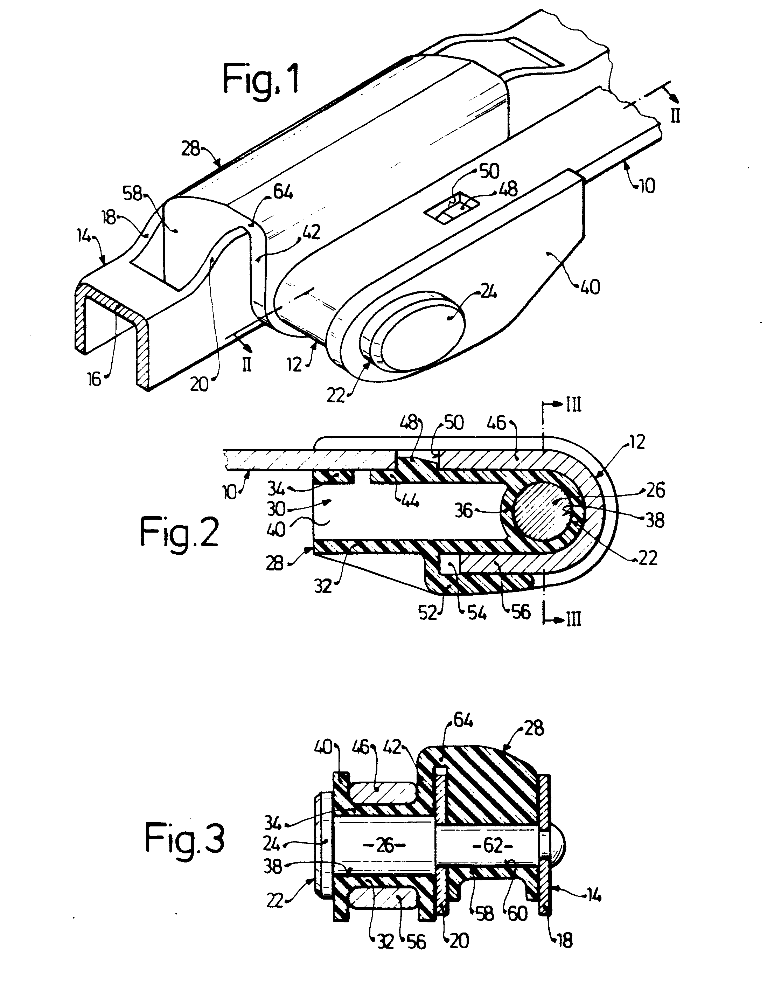

Ein Ausführungsbeispiel der Erfindung ist in der Zeichnung
dargestellt und in der nachfolgenden Beschreibung näher erläutert. Es zeigen Figur 1 eine Teilansicht des Bereiches
eines Wischblatt-Druckverteilungsbügels, in dem der Wischerarm
an einem seitlichen Gelenkbolzen des Bügels befestigt ist, in
perspektivischer Darstellung, Figur 2 einen Längsschnitt durch
ein an dem Gelenkbolzen angelenktes Anschlußelement für den
Wischerarm, entlang der Linie II-II in Figur 1 und Figur 3
einen Schnitt entlang der Linie III-III durch das Wischblatt,
das Anschlußelement und den Wischerarm.

0002843

R. 4226
Sa/Sm

Beschreibung der Erfindung

Zu der erfindungsgemäßen Wischvorrichtung gehören gemäß Figur 1
ein angetriebener Wischerarm 10, der an seinem freien, als
Haken 12 ausgebildeten Ende mit einem Druckverteilungsbügel 14
eines nicht näher dargestellten Wischblatts verbunden ist.
Der Druckverteilungsbügel 14 gehört zu einem Wischblatt-
Tragbügelgestell und hat einen im wesentlichen U-förmigen
Querschnitt. In dem Bereich des Druckverteilungsbügels 14 in
dem der Haken 12 des Wischerarms 10 mit dem Druckverteilungsbügel 14 verbunden ist, ist der die beiden U-Schenkel des
Druckverteilungsbügels 14 verbindende Quersteg 16 entfernt,
so daß dort lediglich die beiden U-Schenkel als mit Abstand
voneinander angeordnete Wangen 18, 20 vorhanden sind. Wie
insbesondere aus Figur 3 ersichtlich ist, ist in den beiden
Wangen 18 und 20 ein Gelenkbolzen 22 gelagert, der quer zur
Wischblatterstreckung angeordnet ist und seitlich aus dem
Druckverteilungsbügel 14 ragt. Der Gelenkbolzen 22 ist an
seinem freien Ende mit einem Hut 24 versehen und zwischen
dem Hut 24 und der diesem zugekehrten Wange 20 des Druckverteilungsbügels 14 ist auf dem freien Gelenkbolzenabschnitt
26 ein Anschlußelement 28 pendelbar gelagert, das eine Aufnahme für den Haken 12 des Wischerarms 10 hat. Der Aufbau
des Anschlußelements 28 ist insbesondere aus Figur 2 ersichtlich. Danach hat das Anschlußelement 28 einen im wesentlichen
U-förmigen Körper 30, dessen beide Schenkel 32, 34 durch
einen Basisabschnitt 36 miteinander verbunden sind. Der
Basisabschnitt 36 weist eine Bohrung 38 auf, in der der freie
Gelenkbolzenabschnitt 26 des Gelenkbolzens 22 gelagert ist.
Die beiden Schenkel 32 und 34 des Anschlußelements 28 sind
durch seitliche Wangen 40 und 42 miteinander verbunden. Dabei ist jedoch ein Teilabschnitt 44 des U-Schenkels 34 des
Anschlußelements 28 gegenüber den Wangen 40 und 42 derart

R. 4226
Sa/Sm

0002843

freigelegt, daß er eine Zunge bildet, welche lediglich mit dem Basisabschnitt 36 des Anschlußelements 28 verbunden ist. Weiter ist die Zunge 44 derart angeordnet, daß sie in der in Figur 2 dargestellten Betriebsstellung, in welcher der Haken 12 des Wischerarms 10, den Körper 30 des Anschlußelements umgibt, vorgespannt an der Innenseite des einen Hakenschenkels 46 des Hakens 12 anliegt. An seiner dem Hakenschenkel 46 zugewandten Seite ist die Zunge 44 mit einer Rastnase 48 versehen, welche in einen Durchbruch 50 des Hakenschenkels 46 greift. An dem anderen Schenkel 32 des Anschlußelements 28 ist ein winkelförmiger Vorsprung 52 angeordnet, der sich im wesentlichen parallel zum Schenkel 32 und um Basisabschnitt 36 des Körpers 30 erstreckt, so daß eine Tasche 54 gebildet wird, welche den anderen Hakenschenkel 56 in der in Figur 2 dargestellten Betriebsstellung der Wischvorrichtung aufnimmt.

Zwischen den beiden Wangen 18 und 20 des Druckverteilungsbügels 14 ist ein zu dem Anschlußelement 28 gehörendes Hilfsglied 58 angeordnet, das sich an den einander zugewandten Steitenflächen der Wangen 18 und 20 stützt. Das Hilfsglied 58 ist mit einer Ausnehmung 60 versehen, mit Hilfe derer es auf dem zwischen den beiden Wangen 18 und 20 befindlichen Abschnitt 62 des Gelenkbolzens 22 pendelbar gelagert ist. Das Hilfsglied 58 des Anschlußelements 28 ist durch einen Steg 64 mit dem Anschlußelement 28 bzw. mit der Seitenwange 42 verbunden.

Durch das zwischen den Wangen 18 und 20 befindliche Hilfsglied 58 des Anschlußelements 28 wird die Festigkeit der Wangen 18 und 20 erheblich verbessert, so daß die im Betrieb der Wischanlage durch den Gelenkbolzen 22 auf diesen Bereichübertragenen Wechselbeanspruchungen ohne nachteilige Auswirkungen aufgenommen werden können.

R. 4226
21.10.1977 Sa/Sm

ROBERT BOSCH GMBH, 7000 Stuttgart 1

**Wischvorrichtung für Scheiben von Kraftfahrzeugen**

A n s p r ü c h e

1. Wischvorrichtung für Scheiben von Kraftfahrzeugen, mit einem
zwei mit Abstand voneinander angeordneten Wangen aufweisenden,
zu einem Wischblatt gehörenden Gestellteils, welches mit einem
quer zur Wischblatterstreckung angeordneten, aus dem Gestellteil ragenden Gelenkbolzen verbunden ist, an dem ein Anschlußelement zum Befestigen eines Wischerarms angelenkt ist, dadurch
gekennzeichnet, daß das Anschlußelement 28 ein zwischen den
Wangen (18, 20) des Gestellteils gelagertes, sich an den
Wangen (18, 20) abstützendes Hilfsglied (58) hat, das mit dem
Anschlußelement (28) durch ein Stegteil (64) verbunden ist,
welches die zwischen Anschlußelement (28) und Hilfsglied (58)
liegende Wange (20) übergreift.

../2

0002843

R. 4226
Sa/Sm

2. Wischvorrichtung nach Anspruch 1, dadurch gekennzeichnet, daß der Gelenkbolzen (22) in beiden Wangen (18, 20) gehalten und das Hilfsglied (58) auf dem, zwischen den Wangen (18, 20) befindlichen Bolzenabschnitt (62) pendelbar gelagert ist.

3. Wischvorrichtung nach einem der Ansprüche 1 oder 2, dadurch gekennzeichnet, daß das Anschlußelement (28) eine gegen den Wischerarm (10, 46) vorgespannt angeordnete Zunge (44) aufweist, die mit einer Rastnase (48) mit einem Durchbruch (50) des Wischerarms (10) zusammenwirkt.

Fig.1

Fig.2

Fig.3

0002843

1/1

Europäisches
Patentamt

**EUROPÄISCHER RECHERCHENBERICHT**

0002843
Nummer der Anmeldung

EP 78 200 269.5

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| - | GB - A - 1 318 978 (D. ARMAN) <br> * Fig. 1 * <br><br> -- <br><br> FR - A - 2 339 514 (SOCIETE D'EXPLOITATION DE BREVETS) <br> * Fig. 6 * <br><br> -- <br><br> DE - B - 2 310 374 (SWF) <br> * Fig. 1 * <br><br> ---- | 1 <br><br><br><br> 1,2 <br><br><br><br><br> 3 | B 60 S  1/40 <br><br><br><br><br><br> RECHERCHIERTE SACHGEBIETE (Int. Cl.²) <br><br> B 60 S  1/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 12-02-1979 | BECKER |

EPA form 1503.1  06.78